# EUROPEAN PATENT APPLICATION

(11) **EP 4 745 568 A1**
(43) Date of publication of application: **20.05.2026**
(21) Application number: 24213013.6
(22) Date of filing: 14.11.2024
(51) Int. Cl.: G01N 30/20, G01N 30/40, G01N 30/14

(54) **CHROMATOGRAPHY SYSTEM WITH SWITCHING VALVE**

(71) Applicant: Evosep ApS, 5230 Odense M (DK)
(72) Inventor: VORM, Ole, 5230 Odense M (DK); HØRNING, Ole Bjeld, 5230 Odense M (DK)
(74) Representative: COPA Copenhagen Patents

(57) **Abstract**

A chromatography system comprising a primary tubing and a switching valve including a plurality of ports: a sample port, a solvent port, a column port, a discharge port, a first primary tubing port, and a second primary tubing port. The primary tubing connects the first primary tubing port and a second primary tubing port. When the switching valve is in a first position, a sample received by the sample port flows into the primary tubing from the first primary tubing port to the second primary tubing port. When the switching valve is in a second position, pressurised solvent received by the solvent port flows into the primary tubing from the second primary tubing port to the first primary tubing port and then towards the column port. When the switching valve is in a third position, pressurised solvent received by the solvent port flows into the primary tubing from the first primary tubing port to the second primary tubing port and then towards the column port.

## Description

### TECHNICAL FIELD

The present disclosure relates to a liquid chromatography system allowing both forward and reverse flushing of a holding loop and/or trapping column without the need for manual reconfiguration.

### BACKGROUND

High-performance liquid chromatography (HPLC) and Ultra-(high)-performance liquid chromatography (U(H)PLC) are powerful techniques used in analytical chemistry to separate, identify, quantify, and/or purify compounds or analytes in samples. A sample, containing different analytes, is separated in time and space by passing the sample through a chromatography column using a mobile phase comprising one or more solvents. After elution from the chromatographic column, the different analytes may be qualitatively and/or quantitatively detected using e.g. mass spectrometry (MS) or spectrophotometry.

Liquid chromatography systems have widespread use in e.g. hospitals and clinical laboratories in analysis of biological samples, such as plasma or urine. For example, HPLC has found use in monitoring therapeutic drug concentrations, performing toxicological screening for poisons and drugs of abuse or for identification and quantification of hormones, vitamins, peptides, or proteins for diagnostic purposes.

Depending on the specific analysis to be performed and the sample origin, different HPLC methods may be required. Briefly explained, in an HPLC run, a sample is injected into a conduit, such as a sample loop, via a sample port. While injecting the sample into the conduit, the loop is detached from the high-pressure fluid conduit in connection with the chromatographic column and solvent pumps. This allows for injecting the sample at ambient pressure while the chromatographic column is calibrating. To initiate the run, the valve is switched to flush the sample in the conduit onto and through the chromatographic column after which the analytes eluting from the column may be detected. If only a single conduit is present, a new sample cannot be loaded into the conduit until the analysis run is complete, thereby increasing cycle time.

As high throughput is of uttermost importance to maximize efficiency and minimize costs, eight port or ten port valves have previously been connected with two conduits to reduce HPLC cycle time. The valve is used to switch between the two conduits such that only one conduit is in fluid communication with the high-pressure pumps and the chromatography column.

Existing systems for chromatographic analyses are typically configured for either forward flushing or reverse flushing of the conduit(s). Generally, reverse flushing is understood as injecting the pressurised solvent in the opposite direction of the direction at which the sample was injected into the respective conduit, i.e. the pressured solvent is injected from the "front" of the sample. Forward flushing is understood to instead inject the pressurised solvent in the same direction as the sample, i.e. the solvent is injected from the "back" of the sample.

Forward flushing through a trapping column provides for mechanical filtering, removing particulate matter and debris from the sample. However, forward flushing usually results in worse chromatographic resolution than when the trapping column is eluted by reverse flushing. Despite the poorer resolution, forward flushing is sometimes chosen for its filtering benefits depending on the sample origin.

Conversely, reverse flushing is chosen when filtering is considered unnecessary. Reverse flushing offers better chromatographic resolution but lacks the mechanical filtering provided by forward flushing. The ability to select between forward and reverse flushing allows operators to optimize the chromatographic analysis based on the specific requirements of the sample and the desired outcome.

If, for a particular run, the opposite of the current configuration is desired, an operator must manually switch the conduit tubing on the inlet and outlet ports on the valve to select between forward or reverse flushing. This is time-consuming, inefficient, and only allows a single mode of flushing when manual reconfiguration may be unavailable during e.g. night runs.

### SUMMARY

On this background, it may be seen as objects of the present disclosure to provide a more automated and flexible solution that can overcome the limitations of existing systems. One or more of these objects may be met by aspects of the present disclosure as described in the following.

A first aspect of this disclosure relates to a chromatography system comprising a switching valve including a plurality of ports:
- a sample port configured for receiving a sample from a sample source;
- a solvent port configured for receiving pressurised solvent;
- a column port configured for being in fluid connection with a chromatography column;
- a discharge port optionally being in fluid connection with a discharge receptacle;
- a first primary tubing port; and
- a second primary tubing port.

The chromatography system further comprises a primary tubing forming a fluid connection from the first primary tubing port to a second primary tubing port. The switching valve may be selectively operable to a plurality of positions, wherein:
- when the switching valve is in a first position, a sample received by the sample port can flow into the primary tubing from the first primary tubing port to the second primary tubing port and preferably then towards the discharge port;
- when the switching valve is in a second position, pressurised solvent received by the solvent port can flow into the primary tubing from the second primary tubing port to the first primary tubing port and then towards the column port; and
- when the switching valve is in a third position, pressurised solvent received by the solvent port can flow into the primary tubing from the first primary tubing port to the second primary tubing port and then towards the column port.

One advantage of using the described chromatography system is its ability to perform both forward and reverse flushing of a sample without manual intervention. This flexibility allows users to choose the optimal flushing method based on the specific requirements of their analysis while allowing a fully automated run. For instance, forward flushing through a trapping column provides for mechanical filtering, removing particulate matter and debris from the sample and/or allows for removal of some non-retained analytes (e.g. salts), prior to initiating a run, while retaining the analytes on the column. However, it often results in poorer chromatographic resolution. Often the stationary phase of the trap column differs from the stationary phase of the analytical column. In such cases, forward flushing may contribute to poor chromatographic resolution. Conversely, reverse flushing typically offers better resolution but does not provide the same level of filtering. The better resolution is obtained by reverse flushing because any unintended separation having occurred by forward flushing during loading of the trap column is equalized by reverse flushing. By incorporating a single loading valve that allows for both forward and reverse flushing, the chromatography system eliminates the need for manual switching of inlet and outlet ports or the addition of an extra valve. This not only simplifies the process but also reduces the risk of peak broadening and maintains the chromatography system's cost-effectiveness and complexity at a manageable level.

Additionally or alternatively, the plurality of ports of the switching valve may further include a first secondary tubing port and a second secondary tubing port, wherein the chromatography system may further comprise a secondary tubing forming a fluid connection between the first secondary tubing port and the second secondary tubing port, wherein:
- when the switching valve is in the first position, pressurised solvent received by the solvent port may flow into the secondary tubing from the first secondary tubing port to the second secondary tubing port and then towards the column port;
- when the switching valve is in the second position, a sample received by the sample port may flow into the secondary tubing from the first secondary tubing port to the second secondary tubing port and preferably then towards the discharge port;
- when the switching valve is in the third position, a sample received by the sample port may flow into the secondary tubing from the second secondary tubing port to the first secondary tubing port and preferably then towards the discharge port; and
- when the switching valve is in a fourth position, a sample received by the sample port may flow into the primary tubing from the second primary tubing port to the first primary tubing port and preferably then towards the discharge port, and pressurised solvent received by the solvent port may flow into the secondary tubing from the second secondary tubing port to the first secondary tubing port and then towards the column port.

By arranging the chromatography system in this way, a pre-loaded sample in one tubing can be flushed, either by forward or reverse flushing, while simultaneously loading a sample in the other tubing, so the system significantly increases throughput. This parallel processing capability reduces overhead and enhances overall efficiency. Additionally, it ensures that the system can handle a higher volume of samples in a shorter period, making it ideal for high-throughput environments.

Additionally or alternatively, the primary tubing may comprise a holding loop and/or a trap column (also called a guard column). Additionally or alternatively, the secondary tubing may comprise a holding loop and/or a trap column (i.e. a guard column).

By incorporating a trap column in the primary tubing and/or the secondary tubing, the chromatography system enhances sample purity by removing particulate matter and some non-retained contaminants before the sample reaches the chromatography column. This leads to increased sample purity and more accurate and reliable results. Additionally, the trap column protects the main chromatography column from impurities and debris, extending its lifespan and reducing maintenance costs. The chromatography system's versatility allows users to choose the appropriate configuration based on their analysis requirements, whether for enhanced purification or column protection. Overall, this results in optimized chromatographic performance with better resolution and peak shapes, crucial for applications in pharmaceuticals, environmental analysis, and food safety.

Additionally or alternatively, the primary tubing and, optionally, the secondary tubing may comprise a holding loop and may omit a trap column. In addition or as an alternative, it can be advantageous to include a filter, such a replaceable filter cartridge, in the respective tubing(s). Such a filter may, in contrast to a trap column, have substantially no retentive properties that may, in some use cases, bring advantages. This can bring the flexibility depending on sample characteristics of filtering during forward flushing through the filter e.g. combined with the benefits of a holding loop, or improved chromatographic resolution provided by reverse flushing as described above.

Additionally or alternatively, the primary tubing and the secondary tubing may comprise different elements tailored for different purposes. For example, the primary tubing may comprise a trap column and/or a holding loop, and the secondary tubing may be different from the primary tubing, e.g. the secondary tubing may omit a trap column and holding loop, comprise the other one of a trap column and a holding loop than the primary loop, or may comprise the same of the trap column and holding loop but with different properties. In an example of the latter, the primary loop may comprise a holding loop with a first conduit diameter and the secondary tubing may comprise a holding loop with a second conduit diameter different from the first conduit diameter. In this way, it is possible to improve the flexibility of the chromatography system allowing a wider range of samples to be effectively processed.

Additionally or alternatively, the plurality of ports of the switching valve may comprise or consists of eight ports. Additionally or alternatively, the plurality of positions of the switching valve may consist of four different positions.

Configuring the switching valve with eight ports and/or four positions may provide a particularly simple and cost-effective way of achieving the above-described advantages.

Further, each distinct position, e.g. each of the first, second, third, and fourth position, may, in some embodiments, be achievable by multiple different angular orientations, e.g. two opposite angular orientations, of the switching valve.

Additionally or alternatively, the switching valve may comprise an actuator configured for automatically switching between the plurality of positions of the switching valve.

By including such an actuator, an automated operation of sample loading into the primary tubing and/or secondary tubing and subsequent forward or reverse flushing thereof is enabled. This automation significantly reduces the risk of human error. The ability to automatically switch between positions also enhances overall system throughput, making the entire process more time-efficient and cost-effective. Furthermore, the use of an actuator enables the system to run longer sequences of sample runs without the need for human supervision, allowing for extended operations, such as overnight runs, thereby increasing productivity and optimizing resource utilization.

Additionally or alternatively, the switching valve may be a rotary switching valve and may comprise a stator and a rotor. Further, upon rotating the rotor relative to the stator, the switching valve may be selectively settable to the plurality of positions. One of the stator or the rotor, preferably the stator, may comprise the plurality of ports. Additionally, the other one of the stator and the rotor, preferably the rotor, may include a plurality of fluid passageways.

Implementing the switching valve as a rotary switching valve is a particularly simple and reliable solution. For example, the different positions of the valve may be achieved by rotating the switching valve by steps of 45 degrees in either the clockwise or counterclockwise direction. This design allows for precise control over the switching mechanism, ensuring accurate positioning and minimizing the chance of mechanical failure. The rotary switching valve's structure facilitates smooth transitions between different operational states, enhancing the system's overall robustness and durability. Moreover, the rotary design contributes to the compactness of the system, saving valuable laboratory space.

Additionally or alternatively, the plurality of ports may be distributed, preferably circularly, along a circumference of the rotary switching valve, preferably of the stator.

Such a distribution of ports is a particularly simple construction and allows ports to be spaced apart while providing a compact switching valve. This configuration not only optimizes the spatial arrangement, making it easier to integrate into existing systems, but it also enhances the efficiency of fluid management within the chromatography system. Ensuring that each port is distributed along the circumference, e.g. equidistantly, simplifies installation, maintenance and troubleshooting, as the orderly layout of ports allows for quicker identification and resolution of issues.

Additionally or alternatively, the plurality of fluid passageways may comprise at least or consist essentially of four fluid passageways.

Additionally or alternatively, the plurality of fluid passageways may comprise at least one, preferably at least two, fluid passageways extending across the switching valve, preferably the rotor of the switching valve, between adjacent fluid passageways of the plurality of fluid passageways.

Additionally or alternatively, each of the plurality of fluid passageways may extend as chords of the switching valve, preferably as chords of the rotor. Additionally or alternatively, each of the plurality of fluid passageways may be straight. Additionally or alternatively, the plurality of fluid passageways may be parallel to each other.

Arranging the fluid passageways as chords, straight and/or parallel, increases the manufacturability and reliability of the switching valve.

Additionally or alternatively, the plurality of fluid passageways may connect the ports in various positions of the switching valve as follows:
- in the first position of the switching valve, a first fluid passageway may connect the sample port and the first primary tubing port, a second fluid passageway may connect the solvent port with the first secondary tubing port, a third fluid passageway may connect the second secondary tubing port and the column port, a fourth fluid passageway may connect the second primary tubing port and the discharge port;
- in the second position of the switching valve, the first fluid passageway may connect the sample port and the first secondary tubing port, the second fluid passageway may connect the first primary tubing port and the column port, the third fluid passageway may connect the solvent port and the second primary tubing port, the fourth fluid passageway may connect the second secondary tubing port and the discharge port;
- in the third position of the switching valve, the first fluid passageway may connect the second primary tubing port and the column port, the second fluid passageway may connect the first secondary tubing port and the discharge port, the third fluid passageway may connect the sample port and the second secondary tubing port, the fourth fluid passageway may connect the solvent port and the first primary tubing port; and
- in the fourth position of the switching valve, the first fluid passageway may connect the first secondary tubing port and the column port, the second fluid passageway may connect the sample port and the second primary tubing port, the third fluid passageway may connect the first primary tubing port and the discharge port, the fourth fluid passageway may connect the solvent port and the second secondary tubing port.

Additionally or alternatively, the chromatography system may be a high-performance liquid chromatography system, ultra high-performance liquid chromatography system or a supercritical fluid chromatography (SFC) system.

Additionally or alternatively, sample received at the sample port may be substantially at atmospheric pressure. Additionally or alternatively, the pressurised solvent may have a pressure of at least 10 bar, preferably at least 100 bar, at least 200 bar, optionally at least 300 bar, preferably at least 400 bar, more preferably at least 500 bar, even more preferably least 700 bar, or most preferably at least 1000 bar. Additionally or alternatively, the pressurised solvent may flow at a flow rate of 1 nL/min - 20 mL/min, preferably 1 nL/min - 2 mL/min, more preferably 5 nL/min - 200 µL/min, or even more preferably 10 nL/min - 100 µL/min.

Additionally or alternatively, the sample source may be an autosampler in fluid connection with the sample port. The autosampler may be configured for automatically delivering samples to the sample port, preferably upon request by a controller of the chromatography system.

Additionally or alternatively, the chromatography system may comprise a pump configured for providing a negative pressure at the discharge port, so that, when the switching valve is in a position establishing fluid communication between the discharge port and the sample port, the pump draws a sample from the sample source, e.g. a sample vial, through the sample port and the primary tubing or, optionally, the secondary tubing, depending on the position of the switching valve. The pump may be configured for automatically delivering samples to the sample port, preferably upon request by a controller of the chromatography system. Such a pump can, thus, replace an autosampler but may alternatively be used in addition to an autosampler.

Additionally or alternatively, the chromatography system may comprise one or more pumps in fluid connection with the solvent port for delivering pressurised solvent to the solvent port.

A second aspect of the present disclosure relates to a method of operating a chromatography system preferably according to the first aspect of the present disclosure. The method may comprise the following steps of:
- setting the switching valve to the first position;
- loading a first sample into the primary tubing via the sample port, optionally by requesting the first sample from the sample source; and
- determining whether to forward flush or reverse flush the first sample from the primary tubing:
   ∘ in accordance with a determination that the first sample is to be reverse flushed from the primary tubing, setting the switching valve to the second position so as to reverse flush the sample in the primary tubing towards the column port; and
   ∘ in accordance with a determination that the first sample is to be forward flushed from the primary tubing, setting the switching valve to the third position so as to forward flush the sample in the primary tubing towards the column port.

Additionally or alternatively, the step of setting the switching valve to the first position may comprise setting the switching valve to either the first position or the fourth position. Further, the step of determining whether to forward flush or reverse flush the first sample from the primary tubing may comprise:
- in accordance with a determination that the first sample is to be reverse flushed from the primary tubing and that the first sample was loaded into the primary tubing when the switching valve was in the first position, the switching valve may be set to the second position so as to reverse flush the sample in the primary tubing towards the column port;
- in accordance with a determination that the first sample is to be reverse flushed from the primary tubing and that the first sample was loaded into the primary tubing when the switching valve was in the fourth position, the switching valve may be set to the third position so as to reverse flush the sample in the primary tubing towards the column port;
- in accordance with a determination that the first sample is to be forward flushed from the primary tubing and that the first sample was loaded into the primary tubing when the switching valve was in the first position, the switching valve may be set to the third position so as to forward flush the sample in the primary tubing towards the column port; and
- in accordance with a determination that the first sample is to be forward flushed from the primary tubing and that the first sample was loaded into the primary tubing when the switching valve was in the fourth position, the switching valve may be set to the second position so as to forward flush the sample in the primary tubing towards the column port;

Additionally or alternatively, the method may further comprise a step of:
- during forward flushing or reverse flushing of the first sample from the primary tubing, a second sample may be loaded in the secondary tubing, optionally by requesting the second sample from the sample source.

Additionally or alternatively, the method may further comprise the steps of:
- determining whether to forward flush or reverse flush the second sample from the secondary tubing:
   o in accordance with a determination that the second sample is to be reverse flushed from the secondary tubing and that the second sample was loaded into the secondary tubing when the switching valve was in the second position, setting the switching valve to the fourth position so as to reverse flush the second sample in the secondary tubing towards the column port;
   o in accordance with a determination that the second sample is to be reverse flushed from the secondary tubing and that the second sample was loaded into the secondary tubing when the switching valve was in the third position, setting the switching valve to the first position so as to reverse flush the second sample in the secondary tubing towards the column port;
   ∘ in accordance with a determination that the second sample is to be forward flushed from the secondary tubing and that the second sample was loaded into the secondary tubing when the switching valve was in the second position, setting the switching valve to the first position so as to forward flush the second sample in the secondary tubing towards the column port; and
   ∘ in accordance with a determination that the second sample is to be forward flushed from the secondary tubing and that the second sample was loaded into the secondary tubing when the switching valve was in the third position, setting the switching valve to the fourth position so as to forward flush the sample in the secondary tubing towards the column port.

A third aspect of the present disclosure relates to a computer-implemented method for operating the chromatography system, preferably according to the first aspect of the present disclosure, comprising the steps of a method according to the second aspect of the present disclosure. The steps of setting the switching valve to any one of the first position, the second position, the third position, or optionally the fourth position comprise causing the actuator to set the switching valve to the respective position.

Additionally or alternatively, the computer-implemented method may further comprise a step of receiving first sample information associated with the first sample, optionally from the autosampler, wherein the step of determining whether to forward flush or reverse flush the first sample from the primary tubing and/or the secondary tubing is based on the first sample information and optionally characteristics of the primary tubing and/or secondary tubing, such as whether the primary tubing and/or the secondary tubing comprise(s) a trap column or a holding loop.

Additionally, the chromatography system according to the first aspect of the present disclosure may further comprise a controller configured for performing a method according to the second aspect or the third aspect of the present disclosure.

A fourth aspect of the present disclosure relates to a controller configured for performing the method of the second aspect or the third aspect.

A person skilled in the art will appreciate that any one or more of the above aspects of this disclosure and embodiments thereof may be combined with any one or more of the other aspects of this disclosure and embodiments thereof.

### BRIEF DESCRIPTION OF THE DRAWINGS

Embodiments of this disclosure will be described in more detail in the following with regard to the accompanying figures. The figures show one way of implementing the present invention and are not to be construed as being limiting to other possible embodiments falling within the scope of the attached claim set.
Fig. 1 is a schematic diagram of a chromatography system according to the present disclosure comprising a switching valve.
Fig. 2A is a schematic diagram of the switching valve in a first position.
Fig. 2B is a schematic diagram of the switching valve in a second position.
Fig. 3A is a schematic diagram of the switching valve in a third position.
Fig. 3B is a schematic diagram of the switching valve in a fourth position.
Fig. 4 is a schematic perspective exploded view of a switching valve according to the present disclosure comprising a rotor and a stator.

### DETAILED DESCRIPTION

In the following figure description, the same reference numbers refer to the same elements and may thus not be described in relation to all figures.

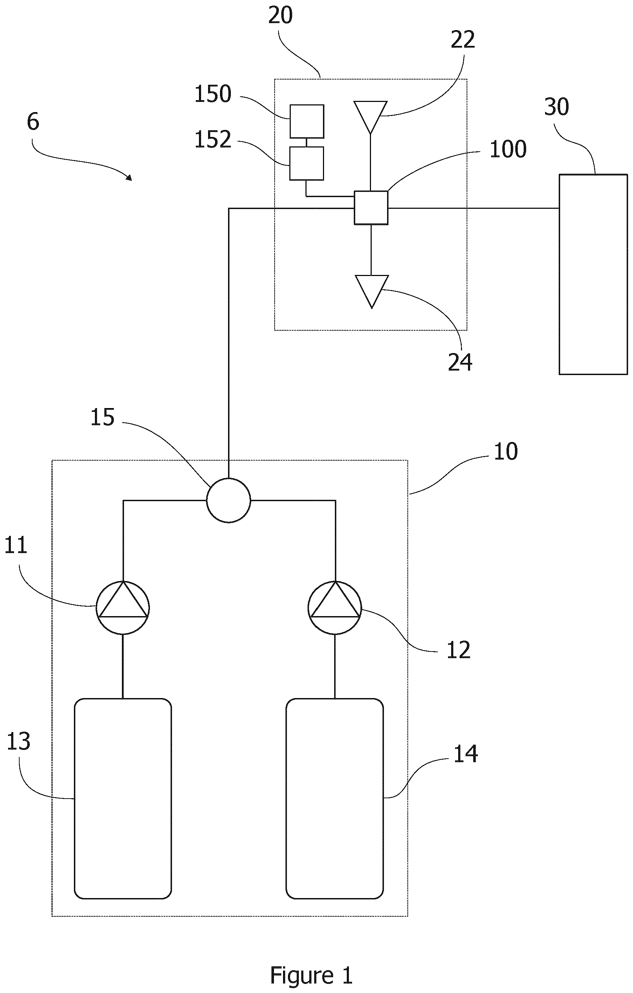

Fig. 1 shows the schematics of a simple embodiment of the present disclosure in a common setup of a HPLC system 6 comprising a solvent source 10 including binary pumps 11, 12, drawing solvents from two flasks 13, 14 through a filter (not shown). The pumps may advantageously be individually monitored and controlled using flow sensors (not shown) in a feedback loop to ensure a constant flow rate. The solvents pass through a mixer 15 and via a sample injector 20 and onto a chromatography column 30. In the present context, Fig. 1 only illustrates one HPLC setup to illustrate a preferred arrangement of the system. In other implementations, the HPLC system 6 could also be an ultra high-performance liquid chromatography system or a supercritical fluid chromatography (SFC) system, and the solvent source may comprise a single pump, three pumps, four pumps or any number thereof.

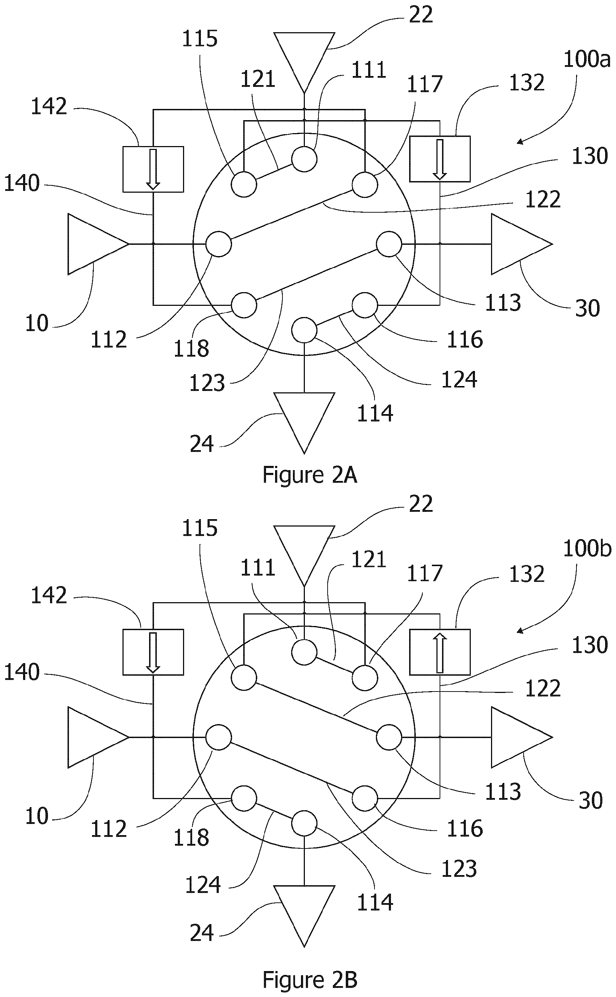

As shown, the sample injector 20 comprises a switching valve 100 arranged between the solvent source 20 and the chromatography column 30. The switching valve 100 is further connected to a sample source 22 and a discharge receptacle 24. The switching valve 100 is described in more details in connection with Figs. 2A-2B, 3A-3B and 4 and can either be manual or, as shown here, motorised. The sample injector 20 further comprises an actuator 152 and a controller 150 configured for automatically switching between a plurality of positions of the switching valve 100 via the actuator 152. In such a case, the switching valve 100 is motorised or automated and configured for automated switching between positions. The sample source 22 is advantageously implemented as an autosampler configured for automatically delivering samples to the switching valve 100 upon request by the controller 150.

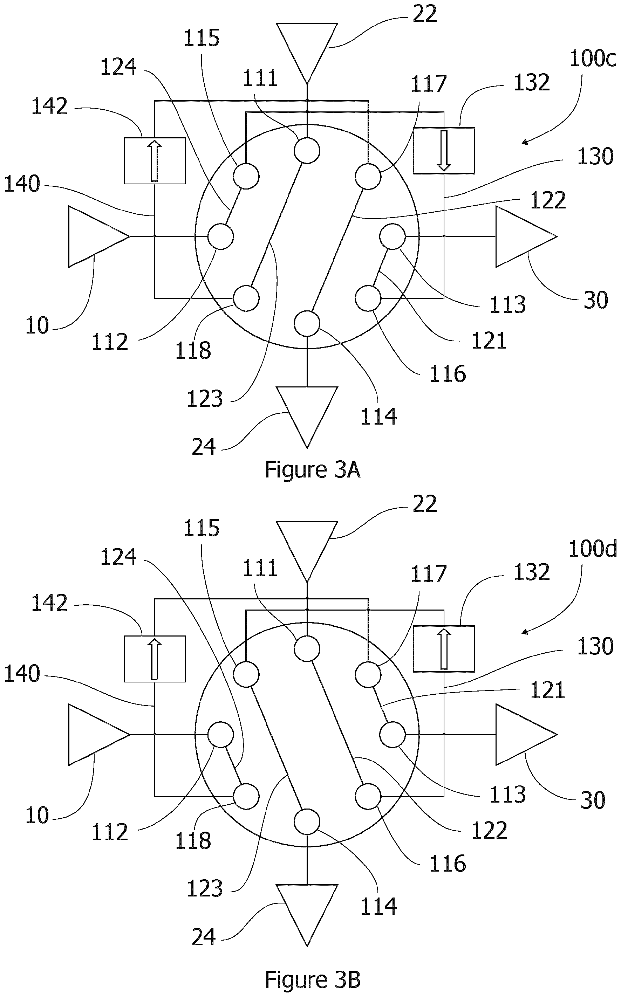

The switching valve is selectively operable to a plurality of different positions: a first position 100a shown in Fig. 2A, a second position 100b shown in Fig. 2B, a third position 100c shown in Fig. 3A, and a fourth position 100d shown in Fig. 3B.

As best seen in Figs. 2A-2B, 3A-3B, and 4, the switching valve 100 includes a plurality of ports: a sample port 111 configured for receiving a sample from the sample source 22, a solvent port 112 configured for receiving pressurised solvent from the solvent source 10, a column port 113 forming a fluid connection with the chromatography column 30, a discharge port in fluid connection with the discharge receptacle 24, a first primary tubing port 115, a second primary tubing port 116, a first secondary tubing port 117 and a second secondary tubing port 118. The chromatography system 6 further comprises a primary tubing 130 forming a fluid connection between the first primary tubing port 115 and a second primary tubing port 116, and a secondary tubing 140 forming a fluid connection between the first secondary tubing port 117 and the second secondary tubing port 118. In the shown implementation, the primary tubing 130 comprises a first trap column 132 and the secondary tubing 140 comprises a second trap column 142. However, depending on the specifications of the system 6, one or both of these trap columns 132, 142 can in other implementations be replaced by or arranged in sequence to a holding loop. The switching valve 100 further comprises a plurality of fluid passageways 121, 122, 123, 124 which each establishes a fluid path between different pairs of ports for each respective position as will be described further below.

Turning to Fig. 2A showing the switching valve 100 in the first position 100a, the fluid passageways connect the ports as follows. A first fluid passageway 121 connects the sample port 111 and the first primary tubing port 151. A second fluid passageway 122 connects the solvent port 112 with the first secondary tubing port 117. A third fluid passageway 123 connects the second secondary tubing port 118 and the column port 113. A fourth fluid passageway 124 connects the second primary tubing port 116 and the discharge port 114. Accordingly, when the switching valve 100 is in the first position 100a as shown, a high-pressure flow path is established where pressurised solvent received by the solvent port 112 flows into the secondary tubing 140 from the first secondary tubing port 117 to the second secondary tubing port 118 and then onwards from the column port 113 towards the chromatography column 30. Further, a low-pressure flow path is established where a sample received by the sample port 111 flows into the primary tubing 130 from the first primary tubing port 115 to the second primary tubing port 116 and then towards the discharge port 114.

Turning to Fig. 2B showing the switching valve 100 in the second position 100b, the fluid passageways connect the ports as follows. The first fluid passageway 121 connects the sample port 111 and the first secondary tubing port 117. The second fluid passageway 122 connects the first primary tubing port 115 and the column port 113. The third fluid passageway 123 connects the solvent port 112 and the second primary tubing port 116. The fourth fluid passageway 124 connects the second secondary tubing port 118 and the discharge port 114. Accordingly, when the switching valve 100 is in the second position 100b as shown, a high-pressure flow path is established where pressurised solvent received by the solvent port 112 flows into the primary tubing 130 from the second primary tubing port 116 to the first primary tubing port 115 and then towards the column port 113. Further, a low-pressure flow path is established where a sample received by the sample port 111 flows into the secondary tubing 140 from the first secondary tubing port 117 to the second secondary tubing port 118 and then onwards from the discharge port 114 to the discharge receptacle 24.

Turning to Fig. 3A showing the switching valve 100 in the third position 100c, the fluid passageways connect the ports as follows. The first fluid passageway 121 connects the second primary tubing port 116 and the column port 113. The second fluid passageway 122 connects the first secondary tubing port 117 and the discharge port 114. The third fluid passageway 123 connects the sample port 111 and the second secondary tubing port 118. The fourth fluid passageway 124 connects the solvent port 112 and the first primary tubing port 115. Accordingly, when the switching valve 100 is in the third position 100c as shown, a high-pressure flow path is established where pressurised solvent received by the solvent port 112 flows into the primary tubing 130 from the second primary tubing port 115 to the first primary tubing port 116 and then onwards from the column port 113 to the chromatography column 30. Further, a low-pressure flow path is established where a sample received by the sample port 111 flows into the secondary tubing 140 from the second secondary tubing port 118 to the first secondary tubing port 117 and then onwards from the discharge port 114 to the discharge receptacle 24.

Turning to Fig. 3B showing the switching valve 100 in the fourth position 100d, the fluid passageways connect the ports as follows. The first fluid passageway 121 connects first secondary tubing port 117 and the column port 113. The second fluid passageway 122 connects the sample port 111 and the second primary tubing port 116. The third fluid passageway 123 connects the first primary tubing port 115 and the discharge port 114. The fourth fluid passageway 124 connects the solvent port 112 and the second secondary tubing port 118. Accordingly, when the switching valve 100 is in the fourth position 100d as shown, a high-pressure flow path is established where pressurised solvent received by the solvent port 112 flows into the secondary tubing 140 from the second secondary tubing port 118 to the first secondary tubing port 117 and then onwards from the column port 113 to the chromatography column 30. Further, a low-pressure flow path is established where a sample received by the sample port 111 flows into the primary tubing 130 from the second primary tubing port 116 to the first primary tubing port 115 and then onwards from the discharge port 114 to the discharge receptacle 24.

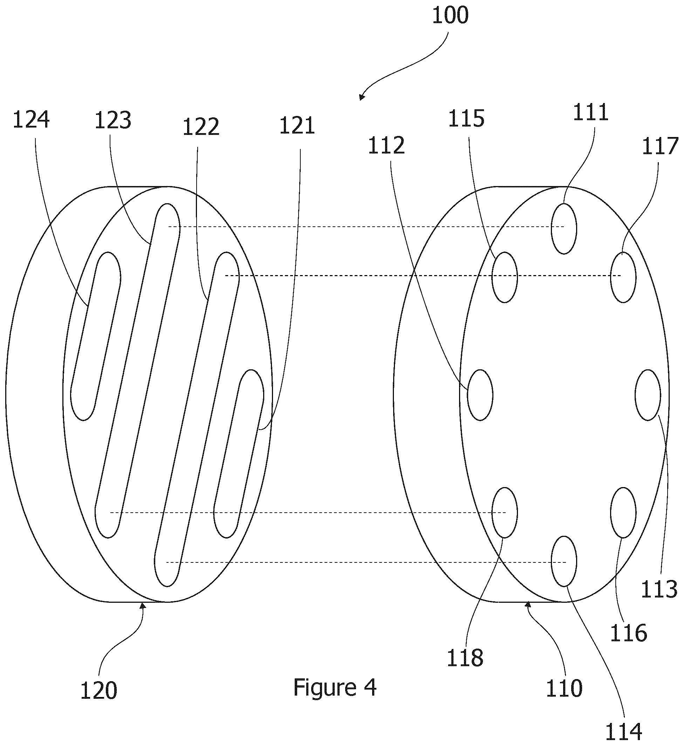

Turning to Fig. 4, a schematic exploded illustration of the switching valve is shown implemented as a rotary switching valve comprising a stator 110 and a rotor 120. The stator 110 and rotor 120 are shown with a distance apart for illustrative purposes. It is understood that the stator 110 and rotor 120 fit closely together and comprise one or more rotary sealing elements (not shown), to prevent leakage between the stator 110 and rotor 120. Furthermore, illustrative dashed lines are shown between the respective ports and fluid passageways to indicate the fluid connections established. Upon rotating the rotor 120 relative to the stator 110 about the centre axis (not shown) of the switching valve 100, the switching valve 100 is selectively settable to the plurality of positions as shown in Figs. 2A-2B and 3A-3B. In this preferred implementation, the stator 110 comprises the plurality of ports 111, 112, 113, 114, 115, 116, 117, 118 while the rotor 120 comprises the plurality of fluid passageways 121, 122, 123, 124. As shown, the ports are circularly distributed equidistantly along a circumference of the stator 110. Each fluid passageway can be formed as grooves in the rotor 120 and extends as straight, parallel chords of the rotor 120. In particular, the second and third fluid passageways 122, 123 extend across the rotor 120 between the first and fourth fluid passageways 121, 124.

In the following, a method of operating the chromatography system 6 comprising the switching valve 100 is described. In an initial state, in which no samples are loaded in the primary tubing and secondary tubing, the switching valve is set to the first position 100a as shown in Fig. 2A or the fourth position 100d as shown in Fig. 3B. This operation can either be performed manually, by an operator rotating the rotor 120 relative to the stator 110 to arrive at the first position. Alternatively, in an automated implementation, the controller 150 causes the actuator 152 to set the switching valve 100 to the first position by rotating the rotor 120 relative to the stator 110.

A first sample from the sample source 22 is then loaded into the primary tubing 130 at substantially atmospheric pressure. Once loaded, the first sample is held in the primary tubing 130 and flows through the trap column 132 (and/or a holding loop). Sample loading can be done manually but is advantageously performed by an autosampler. Accordingly, the controller 150 may request the first sample from the autosampler.

Next, it is determined whether to forward flush or reverse flush the first sample from the primary tubing 130. As described above, this depends on the characteristics of the sample. Accordingly, the autosampler may provide characteristics of the first sample to the controller which may in turn perform this determination. Further, the controller may prompt an operator to input whether the first sample is to be forward or reverse flushed.

In accordance with a determination that the first sample is to be forward flushed from the primary tubing 130 and that the first sample was loaded into the primary tubing 130 when the switching valve was in the first position 100a, the switching valve 100 is then set to the third position 100c so as to forward flush the first sample in the primary tubing 130 towards the column port 113 and onto the chromatography column 30.

In accordance with a determination that the first sample is to be forward flushed from the primary tubing 130 and that the first sample was loaded into the primary tubing when the switching valve 100 was in the fourth position 100d, the switching valve 100 is set to the second position 110b so as to forward flush the first sample in the primary tubing 130 towards the column port 113 and onto the chromatography column 30.

In accordance with a determination that the first sample is to be reverse flushed from the primary tubing 130 and that the first sample was loaded into the primary tubing 130 when the switching valve 100 was in the first position 100a, the switching valve 100 is set to the second position 100b so as to reverse flush the sample in the primary tubing 130 towards the column port 113 and onto the chromatography column 30.

In accordance with a determination that the first sample is to be reverse flushed from the primary tubing 130 and that the first sample was loaded into the primary tubing 130 when the switching valve was in the fourth position 100d, the switching valve is set to the third position 100c so as to reverse flush the sample in the primary tubing 130 towards the column port 113 and onto the chromatography column 30.

One of the advantages of the disclosed chromatography system 6 is the ability to load a second sample in the secondary tubing 140 while the first sample is being either forward or reverse flushed from the primary tubing 130. Thus, during forward flushing or reverse flushing of the first sample from the primary tubing 130, the second sample is loaded in the secondary tubing 140, for example by requesting the second sample from the sample source 22. Once the first sample has been flushed and the second sample is loaded, the second sample can then be either forward or reverse flushed from the secondary tubing 140.

In accordance with a determination that that the second sample is to be forward flushed from the secondary tubing 130 and that the second sample was loaded into the secondary tubing 130 when the switching valve 100 was in the second position 100b, the switching valve 100 is set to the first position 100a so as to forward flush the second sample in the secondary tubing 140 towards the column port 113 and onto the chromatography column 30.

In accordance with a determination that the second sample is to be forward flushed from the secondary tubing 140 and that the second sample was loaded into the secondary tubing 140 when the switching valve 100 was in the third position 100c, the switching valve 100 is set to the fourth position 100d so as to forward flush the second sample in the secondary tubing 140 towards the column port 113 and onto the chromatography column 30.

In accordance with a determination that the second sample is to be reverse flushed from the secondary tubing 140 and that the second sample was loaded into the secondary tubing 140 when the switching valve 100 was in the second position 100b, the switching valve 100 is set to the fourth position 100d so as to reverse flush the second sample in the secondary tubing 140 towards the column port 113 and onto the chromatography column 30.

In accordance with a determination that the second sample is to be reverse flushed from the secondary tubing 140 and that the second sample was loaded into the secondary tubing 140 when the switching valve was in the third position 100c, the switching valve 100 is set to the first position 100a so as to reverse flush the sample in the secondary tubing 140 towards the column port 113 and onto the chromatography column 30.

The above method may advantageously be computer-implemented and further involve steps of receiving first/second sample information associated with the respective first/second sample from the autosampler. Further, the step of determining whether to forward flush or reverse flush the first/second sample from the primary/secondary tubing 130, 140 may be based on the respective first/second sample information and characteristics of the primary/secondary tubing 130, 140, such as characteristics of a trap column 132, 142 and/or a holding loop.

Rather than using an autosampler that infuses samples into the system, the discharge receptacle 24 may be replaced by a pump able to provide negative pressure relative to a sample vial so as to draw in sample solvent from the sample source 22 through the sample source port 111 and into either of the primary/secondary tubing 130/140 as the case may be.

The sample that is deposited in the primary/secondary tubing 130/140 as the case may be, may beyond analyte molecules also contain further volumes of liquid, for instance buffers that form a gradient required to perform a chromatographic separation, i.e. such buffers may enter the system 6 also via the sample port 111 instead of the solvent port 112 as depicted in Figure 1. This also entails that the system 6 may be configured such that samples containing analytes may be loaded into both the primary tubing 130 and the secondary tubing 140, but the system may also be configured such that only one of the two tubings are used for loading analyte containing sample liquid whereas the other tubing is used for storage of buffers such a gradient for separating analytes and buffers for cleaning and re-conditioning the column, respectively. In other words, the two tubings may have essentially the identical function and format so they may be used interchangeably or have a specialized function and format so that each tubing is used for a purpose different from the other tubing. It follows that while one tubing may include a trap column and be able to bind analytes, the other tubing may be identical or not.

There are eight unique positions the switching valve can be in, but as the rotor is rotational symmetrical, positions 180 degrees apart are identical in terms of functionality. In other words, the same fluid passageways are established by two unique positions arranged 180 degrees apart. For example, the first position is identical to a fifth position of the valve achieved by rotating the rotor 180 degrees relative to the stator from the first position. The same applies for opposite position pairs of the second position and a sixth position, the third position and a seventh position, and the fourth position and an eighth position of the switching valve. Thus, opposing valve position pairs are functionally identical and only the first through fourth valve position are described herein whereas the remaining four valve positions may be understood functionally by mirroring the fluid passageways.

The following is a list of items disclosing various embodiments of the present disclosure.
1. A chromatography system comprising:
   - a switching valve including a plurality of ports:
      ∘ a sample port configured for receiving a sample from a sample source;
      ∘ a solvent port configured for receiving pressurised solvent;
      ∘ a column port configured for being in fluid connection with a chromatography column;
      ∘ a discharge port optionally being in fluid connection with a discharge receptacle;
      ∘ a first primary tubing port; and
      ∘ a second primary tubing port; and
   - a primary tubing forming a fluid connection from the first primary tubing port to a second primary tubing port.
2. A chromatography system according to item 1, wherein the switching valve is selectively operable to a plurality of positions, wherein:
   - when the switching valve is in a first position, a sample received by the sample port flows into the primary tubing from the first primary tubing port to the second primary tubing port and preferably then towards the discharge port;
   - when the switching valve is in a second position, pressurised solvent received by the solvent port flows into the primary tubing from the second primary tubing port to the first primary tubing port and then towards the column port; and
   - when the switching valve is in a third position, pressurised solvent received by the solvent port flows into the primary tubing from the first primary tubing port to the second primary tubing port and then towards the column port.
3. A chromatography system according to any one of the previous items, wherein the plurality of ports of the switching valve further include a first secondary tubing port and a second secondary tubing port, wherein the chromatography system further comprises a secondary tubing forming a fluid connection between the first secondary tubing port and the second secondary tubing port, wherein:
   - when the switching valve is in the first position, pressurised solvent received by the solvent port flows into the secondary tubing from the first secondary tubing port to the second secondary tubing port and then towards the column port;
   - when the switching valve is in the second position, a sample received by the sample port flows into the secondary tubing from the first secondary tubing port to the second secondary tubing port and preferably then towards the discharge port;
   - when the switching valve is in the third position, a sample received by the sample port flows into the secondary tubing from the second secondary tubing port to the first secondary tubing port and preferably then towards the discharge port; and
   - when the switching valve is in a fourth position, a sample received by the sample port flows into the primary tubing from the second primary tubing port to the first primary tubing port and preferably then towards the discharge port, and pressurised solvent received by the solvent port flows into the secondary tubing from the second secondary tubing port to the first secondary tubing port and then towards the column port.
4. A chromatography system according to any one of the previous items, wherein the primary tubing comprises a holding loop and/or a trap column and/or a guard column.
5. A chromatography system according to any one of the previous items, wherein the secondary tubing comprises a holding loop and/or a trap column and/or a guard column.
6. A chromatography system according to any one of the previous items, wherein the plurality of ports of the switching valve consists of eight ports and/or the plurality of positions of the switching valve consists of four different positions.
7. A chromatography system according to any one of the previous items, wherein the switching valve comprises an actuator configured for automatically switching between the plurality of positions of the switching valve.
8. A chromatography system according to any one of the previous items, wherein the switching valve is a rotary switching valve and comprises a stator and a rotor, wherein one of the stator or the rotor, preferably the stator, comprises the plurality of ports, and wherein, upon rotating the rotor relative to the stator, the switching valve is selectively settable to the plurality of positions.
9. A chromatography system according to item 8, wherein the plurality of ports is distributed, preferably circularly, along a circumference of the rotary switching valve, preferably the stator.
10. A chromatography system according to any one of items 8-9, wherein the other one of the stator and the rotor, preferably the rotor, includes a plurality of fluid passageways comprising at least or consisting essentially of four fluid passageways.
11. A chromatography system according to item 10, wherein the plurality of fluid passageways may comprise at least one, preferably at least two, fluid passageways extending across the switching valve, preferably the rotor of the switching valve, between adjacent fluid passageways of the plurality of fluid passageways.
12. A chromatography system according to according to any one of items 10-11, wherein each of the plurality of fluid passageways extends as chords on the rotor.
13. A chromatography system according to according to any one of items 10-12, wherein each of the plurality of fluid passageways is straight.
14. A chromatography system according to any one of items 10-13, wherein the fluid passageways are parallel to each other.
15. A chromatography system according to any one of items 10-14, wherein:
   - in the first position of the switching valve, a first fluid passageway connects the sample port and the first primary tubing port, a second fluid passageway connects the solvent port with the first secondary tubing port, a third fluid passageway connects the second secondary tubing port and the column port, a fourth fluid passageway connects the second primary tubing port and the discharge port;
   - in the second position of the switching valve, the first fluid passageway connects the sample port and the first secondary tubing port, the second fluid passageway connects the first primary tubing port and the column port, the third fluid passageway connects the solvent port and the second primary tubing port, the fourth fluid passageway connects the second secondary tubing port and the discharge port;
   - in the third position of the switching valve, the first fluid passageway connects the second primary tubing port and the column port, the second fluid passageway connects the first secondary tubing port and the discharge port, the third fluid passageway connects the sample port and the second secondary tubing port, the fourth fluid passageway connects the solvent port and the first primary tubing port; and
   - in the fourth position of the switching valve, the first fluid passageway connects first secondary tubing port and the column port, the second fluid passageway connects the sample port and the second primary tubing port, the third fluid passageway connects the first primary tubing port and the discharge port, the fourth fluid passageway connects the solvent port and the second secondary tubing port.
16. A chromatography system according to any one of the previous items, wherein the chromatography system is a high-performance liquid chromatography system, ultra high-performance liquid chromatography system or a supercritical fluid chromatography (SFC) system.
17. A chromatography system according to any one of the previous items, wherein the sample received at the sample port is substantially at atmospheric pressure.
18. A chromatography system according to any one of the previous items, wherein the pressurised solvent has a pressure of at least 10 bar, preferably at least 100 bar, at least 200 bar, optionally at least 300 bar, preferably at least 400 bar, more preferably at least 500 bar, even more preferably least 700 bar, or most preferably at least 1000 bar.
19. A chromatography system according to any one of the previous items, wherein the pressurised solvent flows at a flow rate of 1 nL/min - 20 mL/min, preferably 1 nL/min - 2 mL/min, more preferably 5 nL/min - 200 µL/min, or even more preferably 10 nL/min - 100 µL/min.
20. A chromatography system according to any one of the previous items, wherein the sample source is an autosampler in fluid connection with the sample port, wherein the autosampler is configured for automatically delivering samples to the sample port, preferably upon request by a controller of the chromatography system.
21. A chromatography system according to any one of the previous items comprising one or more pumps in fluid connection with the solvent port for delivering pressurised solvent to the solvent port.
22. A method of operating a chromatography system according to any one of the previous items:
   - setting the switching valve to the first position;
   - loading a first sample into the primary tubing via the sample port, optionally by requesting the first sample from the sample source; and
   - determining whether to forward flush or reverse flush the first sample from the primary tubing:
      ∘ in accordance with a determination that the first sample is to be reverse flushed from the primary tubing, setting the switching valve to the second position so as to reverse flush the sample in the primary tubing towards the column port; and
      ∘ in accordance with a determination that the first sample is to be forward flushed from the primary tubing, setting the switching valve to the third position so as to forward flush the sample in the primary tubing towards the column port.
23. A method of operating a chromatography system according to item 22, wherein the step of setting the switching valve to the first position comprises setting the switching valve to the first position or the fourth position, and wherein the step of determining whether to forward flush or reverse flush the first sample from the primary tubing further comprises:
   ∘ in accordance with a determination that the first sample is to be reverse flushed from the primary tubing and that the first sample was loaded into the primary tubing when the switching valve was in the first position, setting the switching valve to the second position so as to reverse flush the sample in the primary tubing towards the column port;
   ∘ in accordance with a determination that the first sample is to be reverse flushed from the primary tubing and that the first sample was loaded into the primary tubing when the switching valve was in the fourth position, setting the switching valve to the third position so as to reverse flush the sample in the primary tubing towards the column port;
   ∘ in accordance with a determination that the first sample is to be forward flushed from the primary tubing and that the first sample was loaded into the primary tubing when the switching valve was in the first position, setting the switching valve to the third position so as to forward flush the sample in the primary tubing towards the column port; and
   ∘ in accordance with a determination that the first sample is to be forward flushed from the primary tubing and that the first sample was loaded into the primary tubing when the switching valve was in the fourth position, setting the switching valve to the second position so as to forward flush the sample in the primary tubing towards the column port.
24. A method according to any one of items 22-23, further comprising a step of:
   - during forward flushing or reverse flushing of the first sample from the primary tubing, loading a second sample in the secondary tubing, optionally by requesting the second sample from the sample source.
25. A method according to item 24, comprising the steps of:
   - determining whether to forward flush or reverse flush the second sample from the secondary tubing:
      ∘ in accordance with a determination that the second sample is to be reverse flushed from the secondary tubing and that the second sample was loaded into the secondary tubing when the switching valve was in the second position, setting the switching valve to the fourth position so as to reverse flush the second sample in the secondary tubing towards the column port;
      ∘ in accordance with a determination that the second sample is to be reverse flushed from the secondary tubing and that the second sample was loaded into the secondary tubing when the switching valve was in the third position, setting the switching valve to the first position so as to reverse flush the second sample in the secondary tubing towards the column port;
      ∘ in accordance with a determination that the second sample is to be forward flushed from the secondary tubing and that the second sample was loaded into the secondary tubing when the switching valve was in the second position, setting the switching valve to the first position so as to forward flush the second sample in the secondary tubing towards the column port; and
      ∘ in accordance with a determination that the second sample is to be forward flushed from the secondary tubing and that the second sample was loaded into the secondary tubing when the switching valve was in the third position, setting the switching valve to the fourth position so as to forward flush the sample in the secondary tubing towards the column port.
26. A computer-implemented method for operating the chromatography system according to any one of items 1-21, comprising the steps of a method according to any one of items 22-25, wherein the steps of setting the switching valve to any one of the first position, the second position, the third position, or the fourth position comprise causing the actuator to set the switching valve to the respective position.
27. A computer-implemented method according to item 26 further comprising a step of receiving first sample information associated with the first sample, optionally from the autosampler, wherein the step of determining whether to forward flush or reverse flush the first sample from the primary tubing and/or the secondary tubing is based on the first sample information and optionally characteristics of the primary tubing and/or secondary tubing.
28. A chromatography system according to any one of the items 1-21 comprising a controller configured for performing a method according to any one of items 22-27.
29. A controller configured for performing a method according to any one of items 22-27.

### LIST OF REFERNCES

- 6: chromatography system
- 10: solvent source
- 11,12: binary pump
- 13,14: flask
- 15: mixer
- 20: sample injector
- 22: sample source
- 24: discharge receptacle
- 30: chromatography column
- 100: switching valve
- 100a: first position
- 100b: second position
- 100c: third position
- 100d: fourth position
- 110: stator
- 111: sample port
- 112: solvent port
- 113: column port
- 114: discharge port
- 115: first primary tubing port
- 116: second primary tubing port
- 117: first secondary tubing port
- 118: second secondary tubing port
- 120: rotor
- 121: first fluid passageway
- 122: second fluid passageway
- 123: third fluid passageway
- 124: fourth fluid passageway
- 130: primary tubing
- 132: first trap column
- 140: secondary tubing
- 142: second trap column
- 150: controller
- 152: actuator

## Claims

1. A chromatography system, preferably high-performance liquid chromatography system, comprising:
- a switching valve (100) including a plurality of ports:
o a sample port (111) configured for receiving a sample from a sample source (22);
∘ a solvent port (112) configured for receiving pressurised solvent;
∘ a column port (113) configured for being in fluid connection with a chromatography column (30);
∘ a discharge port (114) optionally being in fluid connection with a discharge receptacle (24);
∘ a first primary tubing port (115); and
∘ a second primary tubing port (116);
- a primary tubing (130) forming a fluid connection from the first primary tubing port to a second primary tubing port; and
wherein the switching valve is selectively operable to a plurality of positions, wherein:
- when the switching valve is in a first position (100a), a sample received by the sample port (111) flows into the primary tubing (130) from the first primary tubing port (115) to the second primary tubing port (116) and preferably then towards the discharge port (114);
- when the switching valve is in a second position (100b), pressurised solvent received by the solvent port (112) flows into the primary tubing (130) from the second primary tubing port (116) to the first primary tubing port (115) and then towards the column port (113); and
- when the switching valve is in a third position (100c), pressurised solvent received by the solvent port (112) flows into the primary tubing (130) from the first primary tubing port (115) to the second primary tubing port (116) and then towards the column port (113).

2. A chromatography system according to claim 1, wherein the plurality of ports of the switching valve further include a first secondary tubing port and a second secondary tubing port, wherein the chromatography system further comprises a secondary tubing forming a fluid connection between the first secondary tubing port and the second secondary tubing port, wherein:
- when the switching valve is in the first position, pressurised solvent received by the solvent port flows into the secondary tubing from the first secondary tubing port to the second secondary tubing port and then towards the column port;
- when the switching valve is in the second position, a sample received by the sample port flows into the secondary tubing from the first secondary tubing port to the second secondary tubing port and preferably then towards the discharge port;
- when the switching valve is in the third position, a sample received by the sample port flows into the secondary tubing from the second secondary tubing port to the first secondary tubing port and preferably then towards the discharge port; and
- when the switching valve is in a fourth position, a sample received by the sample port flows into the primary tubing from the second primary tubing port to the first primary tubing port and preferably then towards the discharge port, and pressurised solvent received by the solvent port flows into the secondary tubing from the second secondary tubing port to the first secondary tubing port and then towards the column port.

3. A chromatography system according to any one of the previous claims, wherein the primary tubing comprises a holding loop and/or a trap column, and/or wherein the secondary tubing comprises a holding loop and/or a trap column.

4. A chromatography system according to any one of the previous claims, wherein the plurality of ports of the switching valve consists of eight ports and/or the plurality of positions of the switching valve consists of four different positions.

5. A chromatography system according to any one of the previous claims, wherein the switching valve comprises an actuator configured for automatically switching between the plurality of positions of the switching valve.

6. A chromatography system according to any one of the previous claims, wherein the switching valve is a rotary switching valve and comprises a stator and a rotor, wherein one of the stator or the rotor, preferably the stator, comprises the plurality of ports, and wherein, upon rotating the rotor relative to the stator, the switching valve is selectively settable to the plurality of positions.

7. A chromatography system according to claim 6, wherein the other one of the stator and the rotor, preferably the rotor, includes a plurality of fluid passageways comprising at least or consisting essentially of four fluid passageways, optionally wherein each of the plurality of fluid passageways extends as chords on the rotor, and/or wherein each of the plurality of fluid passageways is straight, and/or wherein the plurality of fluid passageways is parallel to each other.

8. A chromatography system according to any one of the previous claims, wherein:
- in the first position of the switching valve, a first fluid passageway connects the sample port and the first primary tubing port, a second fluid passageway connects the solvent port with the first secondary tubing port, a third fluid passageway connects the second secondary tubing port and the column port, a fourth fluid passageway connects the second primary tubing port and the discharge port;
- in the second position of the switching valve, the first fluid passageway connects the sample port and the first secondary tubing port, the second fluid passageway connects the first primary tubing port and the column port, the third fluid passageway connects the solvent port and the second primary tubing port, the fourth fluid passageway connects the second secondary tubing port and the discharge port;
- in the third position of the switching valve, the first fluid passageway connects the second primary tubing port and the column port, the second fluid passageway connects the first secondary tubing port and the discharge port, the third fluid passageway connects the sample port and the second secondary tubing port, the fourth fluid passageway connects the solvent port and the first primary tubing port; and
- optionally in the fourth position of the switching valve, the first fluid passageway connects first secondary tubing port and the column port, the second fluid passageway connects the sample port and the second primary tubing port, the third fluid passageway connects the first primary tubing port and the discharge port, the fourth fluid passageway connects the solvent port and the second secondary tubing port.

9. A chromatography system according to any one of the previous claims, wherein the sample source is an autosampler in fluid connection with the sample port, wherein the autosampler is configured for automatically delivering samples to the sample port, preferably upon request by a controller of the chromatography system.

10. A method of operating a chromatography system according to any one of the previous claims:
- setting the switching valve to the first position;
- loading a first sample into the primary tubing via the sample port, optionally by requesting the first sample from the sample source; and
- determining whether to forward flush or reverse flush the first sample from the primary tubing:
∘ in accordance with a determination that the first sample is to be reverse flushed from the primary tubing, setting the switching valve to the second position so as to reverse flush the first sample in the primary tubing towards the column port; and
∘ in accordance with a determination that the first sample is to be forward flushed from the primary tubing, setting the switching valve to the third position so as to forward flush the first sample in the primary tubing towards the column port.

11. A method of operating a chromatography system according to claim 10, wherein the step of setting the switching valve to the first position comprises setting the switching valve to the first position or the fourth position, and wherein the step of determining whether to forward flush or reverse flush the first sample from the primary tubing further comprises:
∘ in accordance with a determination that the first sample is to be reverse flushed from the primary tubing and that the first sample was loaded into the primary tubing when the switching valve was in the first position, setting the switching valve to the second position so as to reverse flush the first sample in the primary tubing towards the column port;
∘ in accordance with a determination that the first sample is to be reverse flushed from the primary tubing and that the first sample was loaded into the primary tubing when the switching valve was in the fourth position, setting the switching valve to the third position so as to reverse flush the first sample in the primary tubing towards the column port;
∘ in accordance with a determination that the first sample is to be forward flushed from the primary tubing and that the first sample was loaded into the primary tubing when the switching valve was in the first position, setting the switching valve to the third position so as to forward flush the first sample in the primary tubing towards the column port; and
∘ in accordance with a determination that the first sample is to be forward flushed from the primary tubing and that the first sample was loaded into the primary tubing when the switching valve was in the fourth position, setting the switching valve to the second position so as to forward flush the first sample in the primary tubing towards the column port.

12. A method according to any one of claims 10-11, further comprising a step of:
- during forward flushing or reverse flushing of the first sample from the primary tubing, loading a second sample in the secondary tubing, optionally by requesting the second sample from the sample source.

13. A computer-implemented method for operating the chromatography system according to any one of claims 1-9, comprising the steps of a method according to any one of claims 10-12, wherein the steps of setting the switching valve to any one of the first position, the second position, the third position, and optionally the fourth position comprise causing the actuator to set the switching valve to the respective position.

14. A computer-implemented method according to claim 13, further comprising a step of receiving first sample information associated with the first sample, optionally from the autosampler, wherein the step of determining whether to forward flush or reverse flush the first sample from the primary tubing and/or the secondary tubing is based on the first sample information and optionally characteristics of the primary tubing and/or secondary tubing.

15. A chromatography system according to any one of the claims 1-9 comprising a controller configured for performing a method according to any one of claims 10-14.
